# EUROPEAN PATENT APPLICATION

(11) **EP 0 950 612 A1**
(43) Date of publication of application: **20.10.1999**
(21) Application number: 99302889.3
(22) Date of filing: 14.04.1999
(51) Int. Cl.: B65D 25/10, B65D 85/64, B65D 81/02

(54) **Reusable protection system**

(30) Priority: 18.04.1998 GB 9808241; 07.07.1998 GB 9814578
(71) Applicant: Flexible Reinforcements, Ltd., Clitheroe BB7 1AU, Lancs (GB)
(72) Inventor: Eventhall, L.H., C/o Flexible Reinforcement Ltd, Clitheroe BB7 1AU (GB)
(74) Representative: Goddard, David John

(57) **Abstract**

A reusable system (10) for the protection of individual items for the storage and/or repair and/or handling and/or transit thereof is described, the protective system comprising: a relatively rigid lower tray member (12) able to support the weight of said item of goods and on which, in use, said goods are stood; a flexible protective shroud member (14) for draping over said goods in use, the shroud member (14) having means to resist impacts against the goods; and, strap fastening means (16) securing the shroud member (14) and the goods to the tray.

## Description

The present invention relates to a reusable system for protection during storage, handling and transit of delicate and easily damaged domestic and industrial items.

Goods such as so-called "white goods" such as refrigerators, freezers, cookers and other domestic appliances; and, "brown goods" such as televisions and the like are relatively fragile and easily damaged during storage, handling and transit from a retail supplier to a customer's home for example. Even a relatively minor scratch on the paintwork of an appliance will probably result in the customer refusing delivery and resulting in the appliance being returned to the retailer for repair. Televisions, for example, nowadays may be quite large pieces of equipment and almost invariably comprise complex, self-coloured plastics mouldings which, if scratched, require replacement as they cannot economically be repaired. One manufacturer estimates that about 10% of the output of white goods are actually scrapped due to minor damage during transit as it is uneconomic to repair such goods. This is clearly an undesirable state of affairs as the cost of such scrapped goods is invariably eventually passed on to the customer in higher prices and the there is also a detrimental effect in environmental terms.

White and brown goods are frequently sold from large retailing stores in out-of-town shopping centres. Large numbers of individual items of the goods are usually displayed in these stores. Items of brown goods in particular are usually provided by the manufacturers with purpose made packaging comprising close fitting mouldings of expanded plastics foam material in cardboard boxes to protect them during transit and storage. However, when the goods are removed from this purpose made packaging material for display, there is usually insufficient storage space and it is consequently discarded. When the display goods are sold, it is then necessary to protect them during handling and delivery to the customer which is when damage is most likely to occur. Damage also occurs when, for example, goods are collected and returned after warranty repairs for example when the original packaging will probably already have been discarded. Damage can also easily occur to the bottom edge of relatively heavy items such as cookers and freezers for example where they are lifted by forks placed underneath them and lifted by what are essentially decorative body panels.

In Germany, for example, companies importing white and brown goods are obliged to take such disposable packaging back out the country with them. Thus, it may be seen that the problem of providing packaging and dealing with that packaging after use is costly and serious.

Thus, it is necessary to provide alternative protection to that generally supplied by the manufacturer of the goods. So-called "bubble wrap" has been used but this is generally discarded after each use which is environmentally undesirable. Covers such as blankets have been used but these provide no protection against mechanical damage to bottom edges of the goods.

GB-A-1 285 869 describes a cargo container comprising a base or pallet member onto which goods in separate boxes and/or containers are stacked and a flexible covering detachably secured to the base. The flexible covering is provided with a plurality of strap members so that it can be draped around and pulled tightly against the stacked goods on the base so as to conform to the shape of the cargo disposed on the base. However, the purpose and effect of the cargo container described is to maintain the separate items of stacked goods as a cohesive unit of cargo and to protect the cargo temporarily from the elements such as rain for example. The cargo container per se does not protect the goods from impact for example, this being effected by the packaging in which the goods themselves are held within the cargo as a whole.

It is an object of the present invention to provide a protective system for a single item or several related items of goods during storage, handling and in transit and which is re-useable.

According to a first aspect of the present invention, there is provided a reusable system for the protection against impact of individual items of high value goods, as hereinbelow defined, during the storage and/or repair and/or handling and/or transit thereof, the protective system comprising: a rigid lower tray member able to support the weight of said item of goods and on which, in use, said goods are stood; a flexible protective shroud member for draping over said goods in use, the shroud member having means for cushioning impacts thereagainst; and, strap fastening means securing the shroud member and the goods to the tray.

For the purposes of the present invention, "high value goods" are defined as including: so-called "white goods" such as cookers, freezers, refrigerators, washing machines, tumble dryers, micro-wave ovens and the like for example; so-called "brown Goods" such as televisions, video recorders, computers, printers and the like for example; and items of furniture such as wooden tables, cabinets, glass-fronted cupboards and the like which are susceptible to damage by breakage, denting and scratching. It will be clear to the person normally skilled in the art that the above list is by no means exhaustive and that many more items of similar household and commercial goods may reasonably be included within the scope and definition of "high value".

Further, the term "rigid" means that the tray member is capable of supporting the weight of the goods placed on it and being moved about thereon.

The protective system according to the present invention provides a lower tray on which the goods are stood thus providing protection to the lower vulnerable edges of heavy goods; the shroud member provides protection, at least against scratches and abrasions which cause many goods to be scrapped; and, the fastening means provides a strong connection between the tray and the goods and shroud member preventing the goods from toppling from the tray during handling.

The tray member may be a plastics material vacuum or injection moulding, or cast aluminium, or pressed sheet metal, or medium density fibre board (MDF), or timber for example. The tray member may be provided with reinforcing corrugations to improve rigidity and also to provide a convenient means of receiving the fastening means in some embodiments as will be explained in more detail hereinbelow. The tray member may also be provided with downwardly directed ridges or embossments which provide feet and a convenient means of permitting the forks of a handling trolley for example to be inserted underneath to facilitate moving. One of the feet projections may be offset by one projection width from a symmetrical. position to allow interlocking by turning consecutive trays through 180° where stacking is contemplated and as will be explained in more detail below.

The tray members may be of a size dedicated to a particular piece of goods or may be of a size able to accommodate a range of different sized goods.

The tray member may be provided with slots through which fastening strap means may be inserted to fix the shroud member and/or the goods in place.

The tray members are desirably made with features allowing them to be stackable so as to minimise storage volume of the trays per se when not in use.

The shroud member may, for example, be made with outer and inner skins of durable, flexible, non-abrasive plastics materials for example and have a padding material between the skins. The padding material may be any convenient stuffing material such as wadding or closed-cell plastics foam for example which can be sewn through or amenable to welding and easily folded so as to absorb knocks of the type which would cause scratches to the surface of the goods. The shroud members are foldable so as to reduce volume during storage.

Inflatable air bags may be fixed to the interior of the shroud member to protect particularly delicate areas.

Alternatively or in addition to, the plastics material skins may be provided with means to enable the shroud per se to be inflated so as to provide an air cushion to protect the goods. Desirably the shroud member may be provided with a valve to allow deflation when not in use.

Conveniently, the shroud may be formed as a flat sheet with flaps so that it may be folded about the goods so as to accommodate goods within a particular size range.

Thus, a range of three or four shrouds for example may effectively accommodate most of the goods which need to be protected and, similarly with a small number of different tray member sizes. Where the flaps of the shroud member overlie each other, the corresponding mating surfaces may be provided with hook and loop material such as Velcro™, for example, fixed thereto to provide a joint which is strong in shear and unlikely to come apart during handling and transit.

The shroud member may be provided with a pocket in a region which is, in use, adjacent a particularly fragile portion of the goods being transported or stored such as a television screen or the glass front of a cabinet for example. The pocket may be adapted to receive a relatively rigid board or additional padding so as to provide extra protection to the fragile portion. The pocket is ideally open along at least one edge so that the additional protective member may be easily placed or removed according to requirements. Alternatively, the appropriate portion of the shroud member may be provided with material such as hook and loop material and the additional protective member also so provided so as to be easily attachable and removable.

The fastening means may comprise strap members which pass through slots or apertures in the tray member and fasten onto the shroud. Alternatively, the straps may pass around the goods and shroud member so as to secure the goods onto the tray member. However, it is easily possible with over-enthusiastic tightening of such straps to dent or crush the edges of items such as a freezer for example. Consequently, it is preferred that the fastening strap means are flat straps so as to distribute the tightening pressure over a greater area than would be the case with round section rope-type straps for example.

Where straps are provided which pass around the goods and shroud, they may be provided on one face at their end portions with hook and loop type material so that they may be folded back upon themselves after passing through buckles for example to secure the goods to or between tray members. A single strap may be arranged to pass completely around the packaged goods, the strap having a buckle at one end and hook and loop material at the other for example. Alternatively, friction type buckles may be employed or any other suitable means of fastening straps around the goods.

In a modification of the above reusable protective packaging system, a second tray member may be placed on top of the goods being stored or transported. The second tray may be placed on top of the protective shroud such that a top surface of the goods is not damaged and fastening straps may be employed such that they pass around the goods and on top of the second tray thus sandwiching the goods and shroud member between the two trays. In such a modification the goods may be secured to the lower tray by a first set of straps and the second or upper tray member may be secured to the lower tray by a second set of straps. Alternatively, one set of straps may encompass both tray members and the goods and shroud.

In one embodiment of the present invention, strap members and the lower outer portions of the shroud member are provided with hook and loop material such as described above to fasten the tray member to the shroud member. The strength of such hook and loop material is very high in shear and is entirely sufficient to retain the goods on the tray during transit without applying unnecessary stresses to the goods. Clearly it is necessary that the shroud member possess adequate inherent strength since part of the retaining forces on the goods will be transmitted through the shroud member.

In some situations, where for example it may be desired to stack protected items on top of each other and/or where the top surface of the goods is not level for example it is desirable to provide a modified form of the present invention.

According to a second aspect of the present invention, there is provided a reusable system for the protection of individual items of high value goods, as hereinabove defined, during the storage and/or repair and/or handling and/or transit thereof, the protective system comprising: a first, lower tray member to which the goods are, in use, secured by strap means; a second, upper tray member spaced-apart from said first tray member by wall panel members extending therebetween; and strap means securing said first and said second tray members together.

Where the goods being protected comprise relatively higher value items such as televisions for example which frequently have irregular shaped cases but may be relatively smaller than say a cooker, it may be desirable to stack two or more together or to provide extra protection owing to the monetary value or fragility of such items for example. The wall panels may essentially form a box within which the goods are enclosed. Generally, the height of the so-formed container comprising the lower and upper tray members and the wall panel members will be greater than the height of the enclosed goods. Consequently, even if two or more protected items are stacked together, substantially no stresses will be transferred to the goods themselves.

Desirably, the wall panel members are provided with mutually interlocking features along the edges thereof which enable a relatively rigid container to be formed which is resistant to splaying of the wall panels under compressive load. The wall panels may be made of plastics material sheet or MDF for example or any other material suitable for the purpose.

The wall members may additionally be provided with tongues on their lower and/or upper horizontal edges, the tongues locating in slots in the tray member for example to securely locate the wall member in a lateral direction.

The wall members may also be provided with corner braces, if required, to add further rigidity to the container so formed. Such corner braces may comprise slots cut in a vertical direction adjacent the wall panel ends and cooperating brace members also having slots which drop into the slots in the wall panel members.

The types of straps employed may be substantially the same as those employed in the first aspect of the present invention.

The goods which are initially secured to the lower tray may also have a protective shroud as described with reference to the first aspect. However, since the goods are substantially completely enclosed within the protective system of the second aspect of the present invention, such a shroud member may not be necessary. However, a protective member of some form is desirable at least in the region where securing straps contact the casing of the goods to protect against abrasion.

The upper and lower trays desirably have groove formations therein to locate the edges of the wall panel members and to maintain them in an upright position without slipping on the tray surface. The trays also desirably have four side wall members.

A protective system for an item of goods according to the second aspect of the present invention may comprise two trays, four interlocking wall members, a shroud member and the appropriate set of straps. All of theses items may be kept together in a low volume, conveniently stored manner until needed and reused many times. The protective system according to both aspects of the present invention is re-useable in that the tray members, shroud members, straps and wall members may be re-used many times.

In order that the present invention may be more fully understood, examples will now be described by way of illustration only with reference to the accompanying drawings, of which:
Figure 1 shows a schematic perspective view of an embodiment of the present invention in use and illustrating the principal features thereof;
Figure 2 shows a partially sectioned schematic front elevation of the protective system shown in Figure 1;
Figure 3 shows a schematic elevation similar to Figure 1 of a second embodiment of the reusable protective system according to the present invention;
Figure 4 shows a schematic sectioned elevation of a modification of the protective system according to the first aspect;
Figures 5A and 5B show a schematic sectioned elevation of a first embodiment of a protective system according to the second aspect of the present invention and edge formations of mutually interlocking features of wall panel members, respectively;
Figure 6 shows a modification of the protective system shown in Figure 5;
Figure 7 shows a development of a protective shroud member made from sheet material for use in either the first or second aspects of the present invention;
Figures 8A to 8C show a detail of braced wall panel members in the second aspect of the present invention;
Figure 9 shows a further detail for securing wall panel members of the second aspect of the present invention;
Figure 10 shows a modified tray member having asymmetric feet projections to allow more secure stacking; and
Figures 11A and 11B which shows alternative wall panel members according to the second aspect of the present invention.

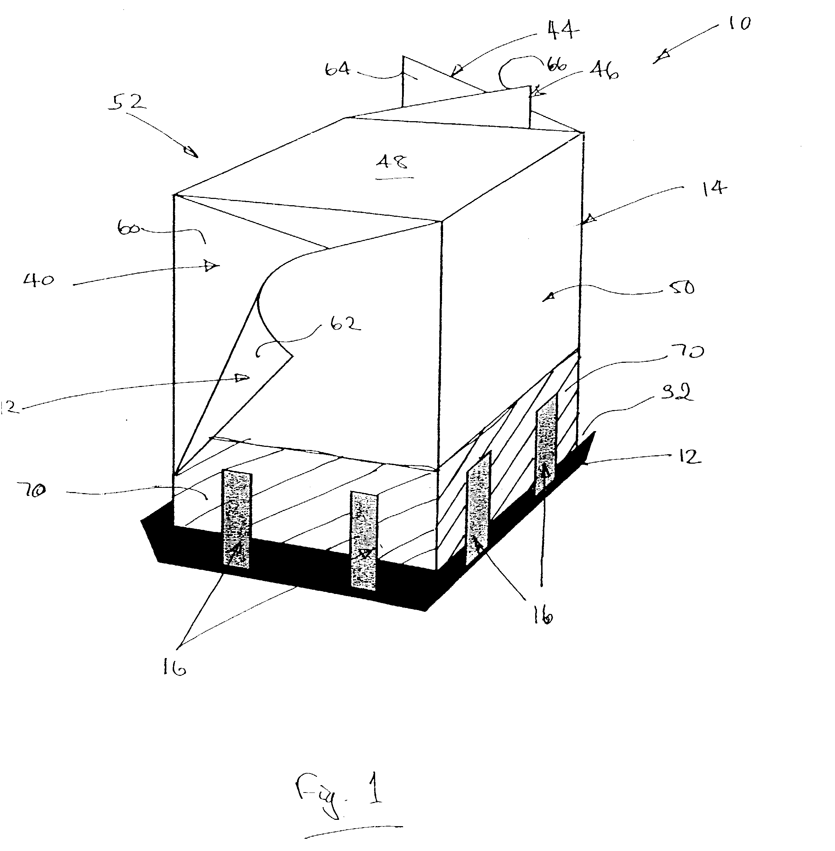

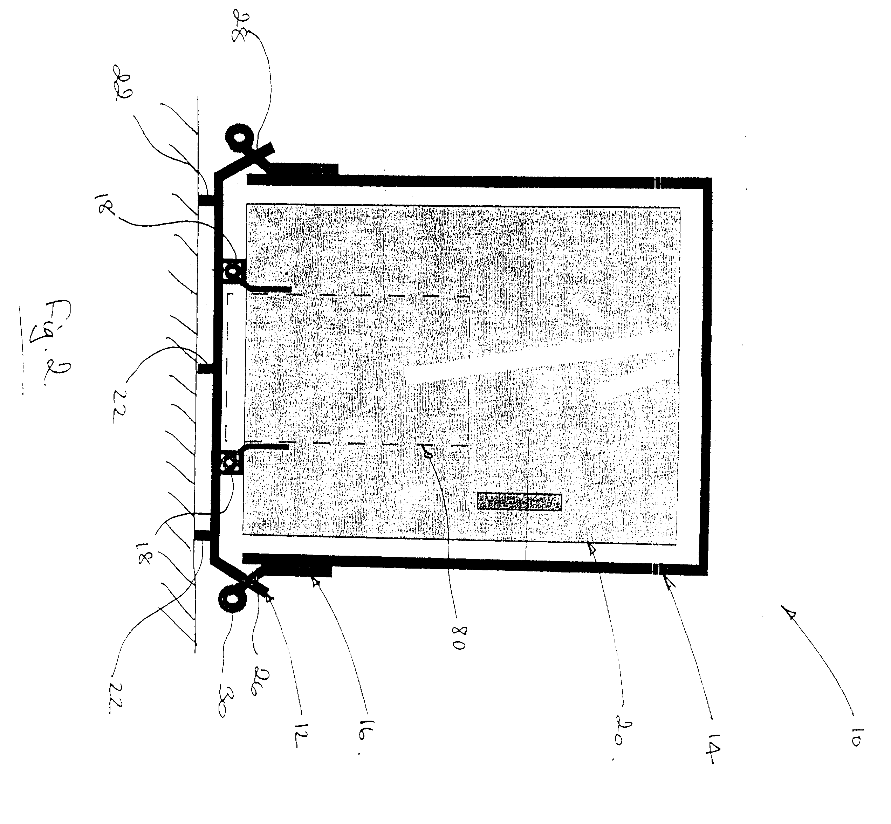

Referring now to the drawings and where a first embodiment of a protective system according to the first aspect of the present invention is indicated generally at 10. The system comprises a tray member 12; a shroud member 14 covering goods to be protected (not shown in Fig.1); and, fastening means 16 holding the shroud 14, and consequently the goods, to the tray 12. The tray member 12 comprises a plastics moulding having corrugations 18 therein to make it more rigid and enable the tray to support an item such as a refrigerator 20 for example. The tray has downwardly directed feet 22 to support the tray and goods on the ground 24 and allow the forks (not shown) of handling equipment (also not shown) to be inserted thereunder. The tray 12 has generally upwardly directed sides 26 to further increase rigidity and to provide convenient means to locate the fastening or retaining straps 16 through slots 28 therein, the straps having a thicker portion 30 to prevent them being pulled through the slots 28 (although Fig.2 shows a gap between the shroud 14 and goods 20, in practice there is no such gap as the shroud 14 is held tightly onto the goods 20 by the straps 16). The tray 12 for items weighing in excess of about 20kg, e.g. refrigerators and cookers for example, is preferably made with side walls 26 on three sides only, allowing an open front face 32 to enable the tray to be slipped underneath the goods whilst the latter are tilted. For items weighing less than about 20kg, e.g. televisions videos and the like, a four sided tray may be used, the goods remaining on the tray from the shop to the customer or whilst under repair for example. The shroud member 14 comprises inner and outer skins of flexible plastics material sheet having a core of plastics foam material therebetween, the construction being by sewing or welding. The shroud 14 as shown in Figure 1 is made up of a number of flap panels 40, 42, 44, 46 connected integrally with a top 48 and two side panels 50, 52. The overlapping faces 60, 62 and 64, 66 of the flap panels 40, 42 and 44, 46 are provided with hook and loop material fixed thereto so that when pressed onto each other a very strong bonding force in shear is formed. Similarly, the lower portions 70 of the outer surfaces of the flap and side panels are provided with sheet hook and loop material as are the inner faces of the fastening straps 16. Thus, once the goods 20 have been placed on the tray 12, the shroud may be draped over the goods, the flaps 40, 42 and 44, 46 pulled around the goods and pulled together and the straps 16 placed on the hook and loop material on the portion 70 rendering the goods 20 protected from scratches and abrasions and damage to unprotected edges. With the protective system according to the present invention, should the customer have a need for it, it is possible to produce a shroud capable of suspending an average size and weight cooker from the shroud itself. This indicates the strength to be found in the hook and loop type fastening.

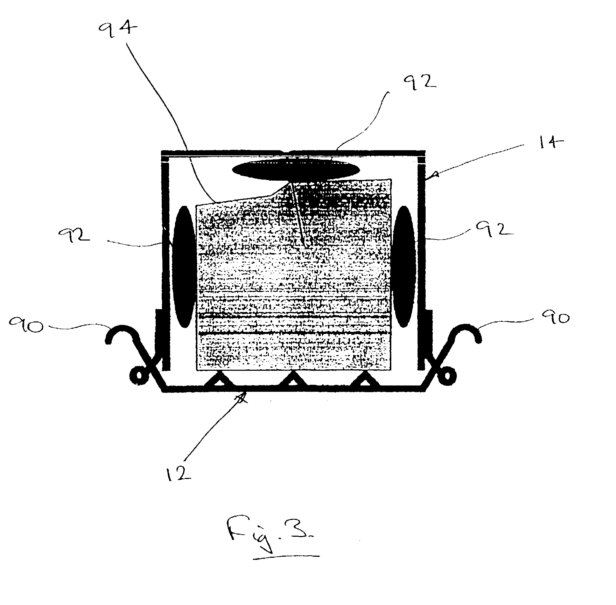

Figure 3 shows a view similar to Figure 2 for use with smaller items of goods such as televisions, microwave cookers and the like which weigh less than about 20kg. The tray member 12 in this case is provided with handles 90 to facilitate manual handling. The shroud 14 is provided with inflatable air bags 92 on the inside thereof in strategic positions. The bags 92 may fixed to the inside of the shroud by welding for example and may be provided with inflation means such as a valve for example to enable inflation and deflation from outside the shroud. Although the shroud 14 in Figure 3 appears to be rigid, in reality it is relatively soft and compliant and conforms to the goods 94 being protected.

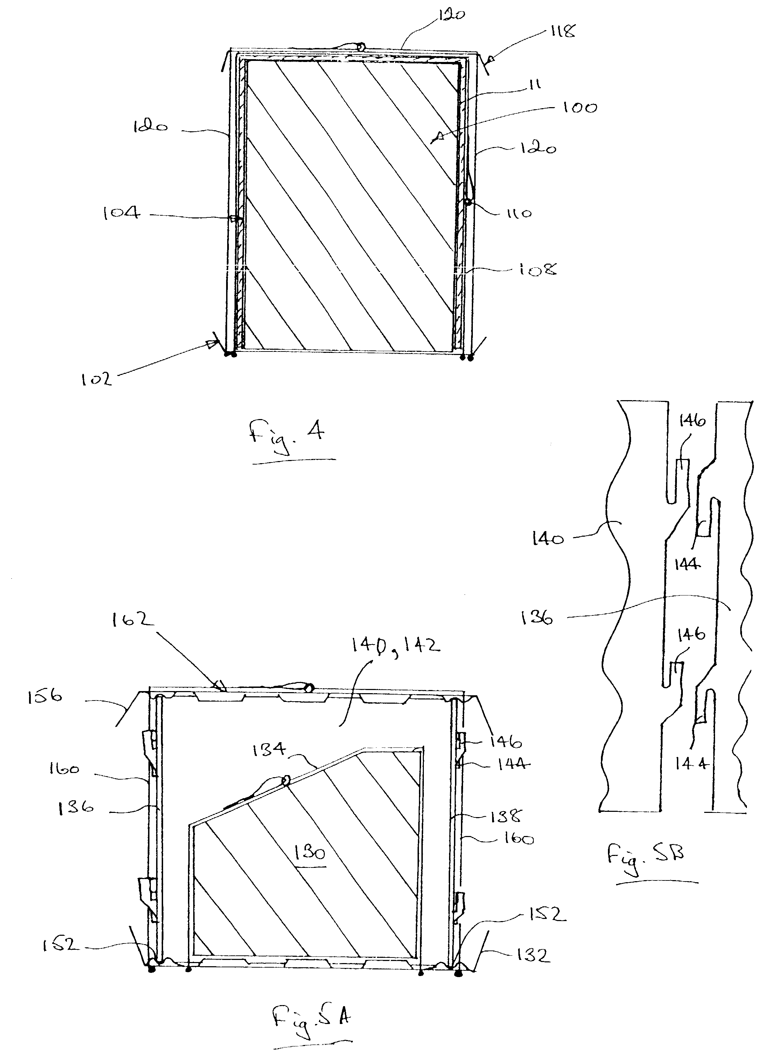

Figure 4 shows an item of goods such as a refrigerator 100 standing on a tray member 102 and having a shroud member 104. The goods 100 are secured to the tray 102 by straps passing around the outside of the goods and shroud 104. One strap 108 has a buckle 110 at its end and the other strap 112 has the end portion thereof provided with hook and loop material on one face such that when the end portion is passed through the buckle 110 and folded back on itself it securely fastens the goods to the tray 102. A second tray member 118 is then placed on the upper face of the goods on top of the shroud 104 and a second set of straps 120 pass through slots in the base of the trays 102, 118 and fasten together as with the straps 108, 112. Thus, all faces and edges of the goods are well protected against damage.

When the protective system as shown in Figure 4 is not in use, the shroud 104 may be folded and placed inside one of the trays along with most of the straps and the second tray placed on top and one strap used to secure the two trays together. In this way a unit is created which is easy to store and takes up a minimum amount of space.

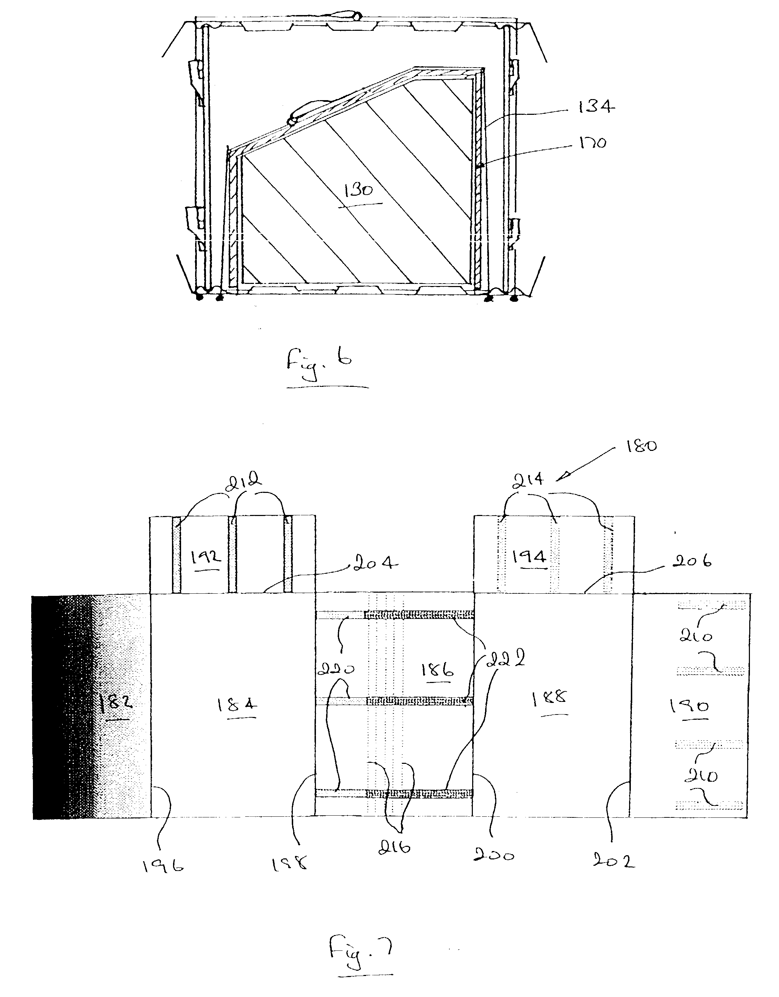

Figure 5 shows an embodiment of the second aspect of the present invention where a television set 130 stands upon a lower tray member 132 and is fastened thereto by straps 134 which fasten by buckles and hook and loop material in the same manner as described with reference to Figure 4. In this embodiment, however, four wall members 136, 138, 140, 142 are joined together by hook members 144, 146 formed on the edges of each panel member. The wall members when joined together form a box 150 which is resistant to splaying when under compressive load due to the interlocking hook members 144, 146. The lower edges of the wall members sit in grooves 152 formed in the lower tray 132 to give a positive location and to prevent sideways slippage of the wall members. A second, identical tray member 156 is placed on top of the rectangular edge formed by the members 136 to 142 and a second set of straps 160 fastens the upper tray member 156 to the lower tray member 132. Thus, a rigid box-like container 162 is formed within which the goods 130 are secured and protected. Orientation of the so formed closed container is not too important as the goods within are securely fastened to the lower tray 132.

In this embodiment, at least opposite wall panel members may be substantially identical.

As before, a packaging/protective unit may be formed by four wall panels, two stackable trays and the appropriate number of straps. Such protective units for this or any of the other embodiments of the present invention may be supplied to the manufacturer directly for shipment of the goods to retailers and returned to the manufacturer after delivery to the customer thus, huge quantities of otherwise disposable packaging may be avoided. The straps for example may have seals applied by the manufacturer so that tampering with goods en route may be detected.

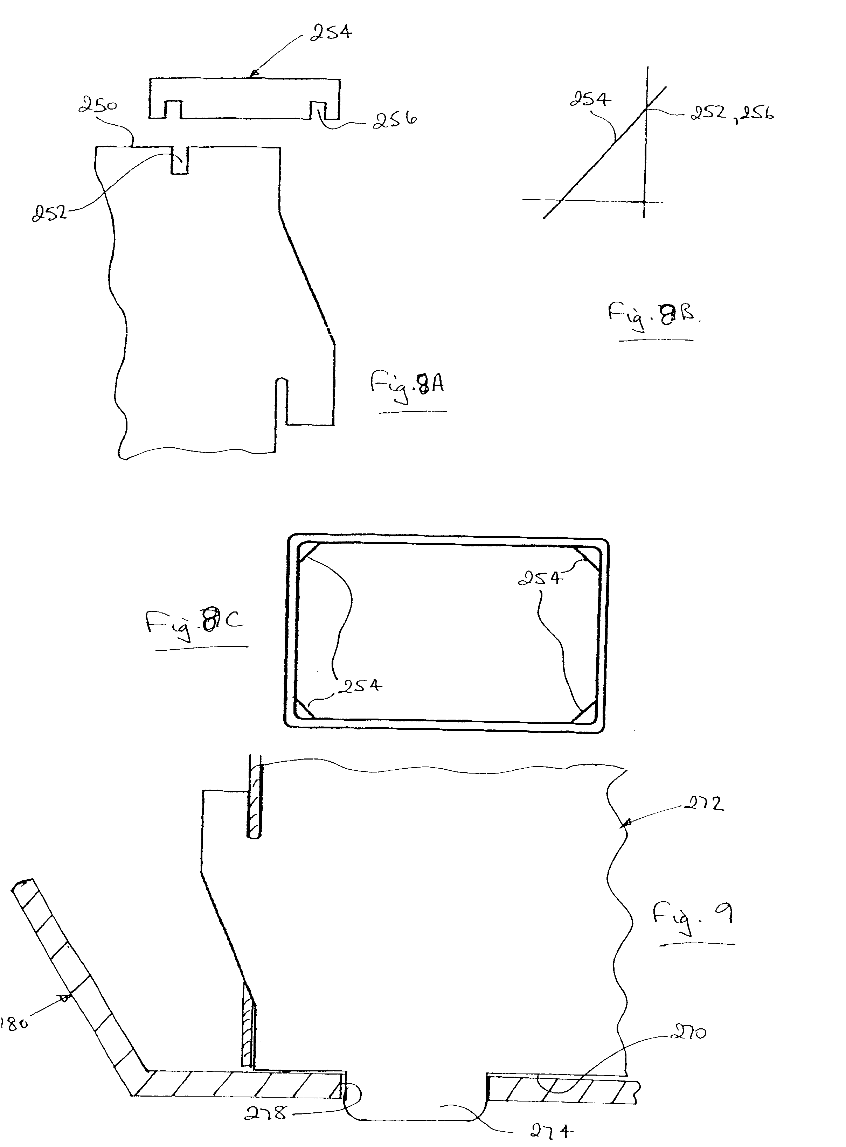

Figure 6 shows a similar protective system to that described with reference to Figure 5 but with the addition of a protective shroud member 170 between the goods 130 and the straps 134 so as to guard against scratching and abrasion. Apart from the inclusion of the protective shroud member, this embodiment is essentially the same as that described with reference to Figure 5.

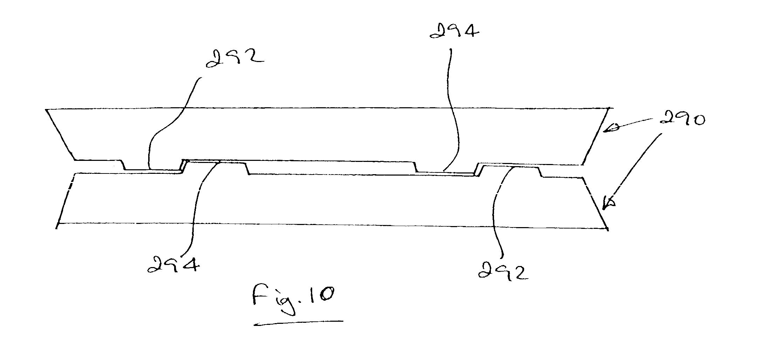

Figure 7 shows a shroud member 180 which, in principle, could be used with any embodiment of either the first or the second aspects of the present invention. The shroud shown in Figure 7 laid out in developed form may be suitable for a cooker or refrigerator for example. The shroud comprises seven panel portions 182 to 194 inclusive and all separated by fold lines or seams 196 to 206 inclusive. The shroud is made from two skins of strong, flexible and smooth plastics material such as PVC for example and having a padding material of plastics foam material or a fibrous wadding material (not shown) therebetween. In use, three vertical faces are constituted by the panels 184 to 188 and variation in size of different goods being protected is accommodated by overlapping of panels 182 and 190. The outer face of panel 182 is provided with sheet hook and loop material and the inner face of panel 190 is provided with strips 210 of similar material so as to fasten when pressed together. Similarly, protection of the top of the goods is provided by panels 192, 194 which have corresponding strips 212, 214 of hook and loop material. Further size adjustment to match that of the goods may be effected by a plurality of, in this case five, sewn seams 216 in panel 186 which allows the panel to be pleated and held in the pleated position by strips of hook and loop material 220, 222 sewn to the panel. The shroud 180 may be made from a single sheet of material appropriately seamed or from panels sewn together or a combination thereof.

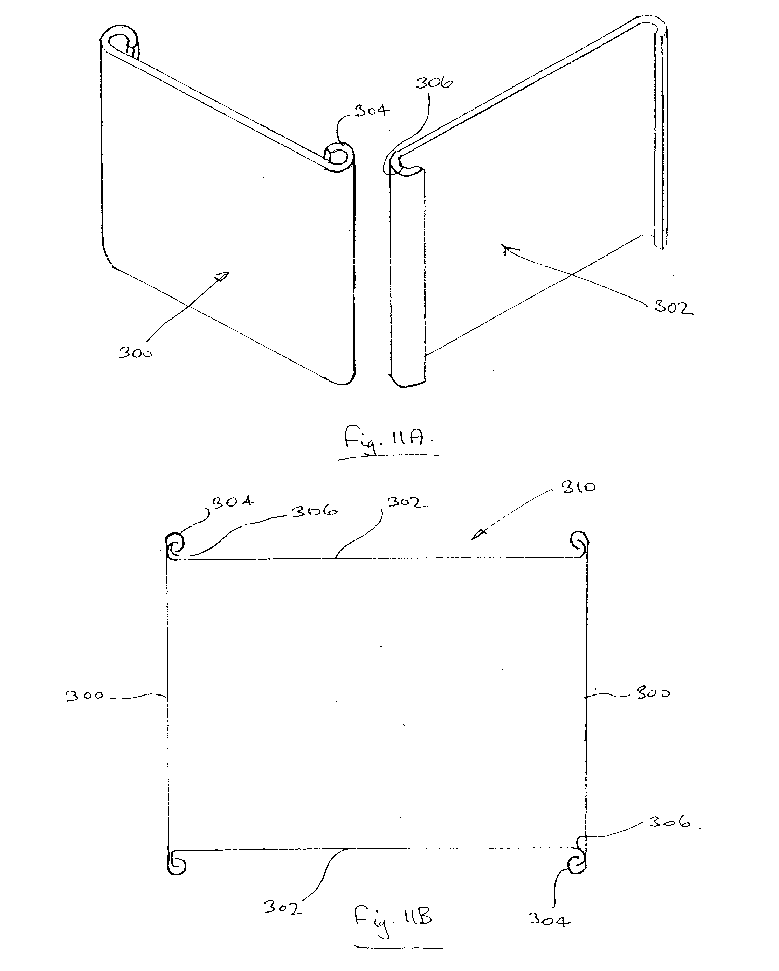

Figures 8A to 8C show a detail of a modified embodiment of the second aspect of the present invention where the top edges 250 of the wall panel members are provided with slots 252 adjacent the corners such that a corner bracing member 254 having corresponding slots 256 may be inserted between the corner of two wall panel members as shown in Figure 7B to stiffen the overall box-like structure. Figure 7C shows a plan view of a four panel members having braces 254 at all four corners. Such braces may be employed at the top and/or bottom edges of the wall panel members.

Figure 9 shows a section through a detail of an alternative embodiment of the second aspect of the invention where the lower edge 270 of a wall panel member 272 is provided with a tongue 274 which locates in a co-operating slot 278 in the tray member 280. In this embodiment, the groove 152 shown in Figures 5 and 6 may be omitted if desired.

Figure 10 shows two tray members 290 wherein the feet projections 292, 294 are asymmetrical which allows, when one tray is turned through 180°, interlocking of tray members during stacking of packaged goods.

Any of the alternative features of the invention may be interchanged between embodiments as appropriate providing that no mechanical inconsistency arises.

Figures 11A and 11B show perspective views of alternative wall panel members according to the second embodiment of the present invention. Two panel members 300, 302 are shown and which interlock with each at their ends by virtue of their curved form 304, 306. A wall closure 310 (see Figure 11B which shows a closure in plan view) may be formed by employing two walls of panel 300 and two walls of panel 302. The wall panel members of Figure 11 may be used for example in the embodiments shown in Figures 5A and 6. In the example shown, the wall panel members 300, 302 may be made from moulded ABS for example.

The protective system according to the present invention may be reused many times and may be used on different sized goods. A smaller item such as a microwave cooker or television for example is indicated in dashed lines 80 in Figure 2, the ridges or corrugations 18 allowing fastening straps to be retained therein and a smaller shroud member 14 being provided.

The system as described is, of course, also suitable for protecting goods collected from customer's homes for example for repair.

## Claims

1. A reusable system for the protection of individual items of high value goods, as hereinbefore defined, during the storage and/or repair and/or handling and/or transit thereof, the protective system comprising: a relatively rigid lower tray member able to support the weight of said item of goods and on which, in use, said goods are stood; a flexible protective shroud member for draping over said goods in use, the shroud member having means to resist impact damage to the goods; and, strap fastening means securing the shroud member and the goods to the tray.

2. A protective system according to claim 1 wherein the tray member is selected from the group comprising: a plastics material vacuum or injection moulding; cast aluminium; pressed sheet metal; fabricated sheet metal; MDF; and, timber.

3. A protective system according to either claim 1 or claim 2 wherein the tray member is provided with reinforcing corrugations.

4. A protective system according to any one preceding claim wherein the tray member has side walls on three sides thereof.

5. A protective system according to any one of preceding claims 1 to 4 wherein the tray member is substantially rectangular and has four side walls.

6. A protective system according to either claim 4 or claim 5 wherein the side walls have apertures to receive fastening strap means.

7. A protective system according to any one preceding wherein tray members are stackable one with another.

8. A protective system according to any one preceding claim wherein the shroud member has outer and inner skins of flexible plastics materials and has a padding material between the skins.

9. A protective system according to claim 8 wherein the padding material is a wadding or foam plastics material.

10. A protective system according to claim 9 wherein the plastics foam material is of closed-cell structure.

11. A protective system according to any one preceding claim wherein the shroud member is inflatable or has inflatable compartments.

12. A protective system according to any one preceding claim wherein the shroud member is formed with flaps so that it may be folded about the goods so as to accommodate goods within a size range.

13. A protective system according claim 12 wherein the flaps of the shroud member overlie each other in use and the mating surfaces are provided with hook and loop material for joining the flaps together.

14. A protective system according to any one preceding claim wherein hook and loop material is fixed to the lower portions of the shroud member thereof and corresponding mating faces of fastening strap means are similarly so provided.

15. A protective system according to any one preceding claim wherein a second tray member is provided to protect a top surface of the goods.

16. A protective system according to claim 15 wherein said second tray member is secured to the first tray member by strap means.

17. A protective system according to either claim 15 or claim 16 wherein the first and second tray members are held spaced-apart by intervening wall panel members.

18. A reusable system for the protection of individual items of high value goods, as hereinbefore defined. during the storage and/or repair and/or handling and/or transit thereof, the protective system comprising: a first, lower tray member to which the goods are, in use, secured by strap means; a second, upper tray member spaced-apart from said first tray member by wall panel members extending therebetween; and strap means securing said first and said second tray members together.

19. A protective system according to claim 18 wherein the wall panel members have mutually interlocking fastening means at their edges.

20. A protective system according to either claim 18 or 19 further including a shroud member around the goods.

21. A protective system according to any one of preceding claims 18 to 20 wherein the wall panel members are provided with tongue members on their lower and/or top horizontal edges to engage with apertures in the tray member.

22. A protective system according to any one of preceding claims 18 to 21 wherein the wall panel members are provided with corner braces.

23. A protective system according to any one of preceding claims 18 to 22 wherein the wall panel members have mutually interlocking curved ends.
